# EUROPEAN PATENT SPECIFICATION

(11) **EP 3 486 027 B1**
(45) Date of publication and mention of the grant of the patent: **28.12.2022**
(21) Application number: 17202865.6
(22) Date of filing: 21.11.2017
(51) Int. Cl.: B23K 26/146, B23K 26/70

(54) **MEASURING A FLUID JET GUIDING A LASER BEAM**
MESSUNG EINES FLÜSSIGKEITSSTRAHLS ZUR FÜHRUNG EINES LASERSTRAHLS
MESURER UN JET DE FLUIDE GUIDANT UN FAISCEAU LASER

(43) Date of publication of application: 22.05.2019
(73) Proprietor: SYNOVA S.A., 1266 Duillier (CH)
(72) Inventor: Diboine, Jérémie, 1007 Lausanne (CH); Hippert, David, 1212 Lancy (CH); Diehl, Helgi, 1110 Morges (CH); Richerzhagen, Bernold, 1025 Saint-Sulpice (CH)
(74) Representative: Roth, Sebastian

(56) References cited:
- DE-A1-102010 011 580
- DE-A1-102015 122 872
- JP-A- 2005 288 472
- JP-A- 2017 131 907
- US-A1- 2017 157 709

## Description

### TECHNICAL FIELD

The present invention relates to an apparatus for machining a workpiece with a high-intensity laser beam coupled into a pressurized fluid jet. According to the invention, the apparatus is particularly configured to measure the fluid jet guiding the laser beam. The invention relates also to a method for measuring a fluid jet guiding a high-intensity laser beam, wherein the laser beam is suitable for machining a workpiece. The invention is specifically concerned with measuring flow characteristics of the fluid jet based on a laser-induced secondary emission.

### BACKGROUND

A conventional apparatus for machining a workpiece with a laser beam coupled into a pressurized fluid jet is generally known. In order to machine the workpiece with the laser beam, the fluid jet is usually generated with a fluid jet generation nozzle, and the laser beam is coupled into and guided in the fluid jet onto the workpiece by means of total internal reflection.

A problem typically encountered in the conventional apparatus is that the fluid jet is only laminar over a certain absolute length from the fluid jet generation nozzle. Beyond that length, the fluid jet becomes instable and finally disperses into droplets. Once the fluid jet becomes instable, the fluid is not anymore able to guide the laser beam such that the workpiece can be machined efficiently. When the fluid disperses into droplets, the laser beam is even scattered.

Notably, in this document the term "fluid jet" means the laminar fluid jet. After becoming instable, the fluid may still propagate in a continuous liquid flow, before it disperses into droplets. Further, a "usable" length of the fluid jet may be shorter than its "absolute" length, since only the free-flowing fluid jet, after being output from the apparatus, is usable for machining a workpiece.

Accordingly, for an efficient machining process, the workpiece has to be positioned close enough to the apparatus, so that it is impinged by the usable portion of the fluid jet.

If the usable length of the fluid jet becomes too short, an efficient machining process may thus not be possible. Further, a very short fluid jet, or the complete absence of a fluid jet, may indicate a graver problem with the apparatus, for instance a broken fluid jet generation nozzle.

Additionally, also flow characteristics of the fluid jet may influence the efficiency of the workpiece machining process.

In view of the above, it would be of great advantage - before actually machining a workpiece - to determine a usable length of the fluid jet. Further, it would be even more advantageous, if also flow characteristics of the fluid jet, like its laminar behavior or perturbations in the fluid, could be determined. Unfortunately, the conventional apparatus does not allow any inherent measurement of the usable length of the fluid jet. External measuring devices could be used, but are typically inefficient since not being specifically designed for the case at hand, namely for measuring a high-intensity laser beam coupled into a very thin fluid jet (15-500 µm). Therefore, the present invention aims at improving the conventional apparatus and fluid jet measuring solutions. It is accordingly an object of the invention to provide an apparatus and method for measuring a fluid jet guiding a high-intensity laser beam suitable for machining a workpiece. In particular, flow characteristics of the fluid jet should be derived. Another goal of the invention is to enable the determination of a length of the fluid jet and a simple measurement of the laser power introduced by means of the laser beam into the fluid jet.

Thereby, the invention aims particularly for a simple but precise and non-invasive solution for carrying out said measurements. In particular, neither a complicated measuring setup should be necessary, nor should a post-processing of the measurement results require much time and computational resources. All measurements should further be performable by the apparatus itself, wherein nevertheless a compact apparatus is desired.

JP 2005-288472 A describes a hybrid processing apparatus which can coincide the axial center of a water jet-flow and the optical axis of a laser beam.

US 2017/0157709 A1 (which forms the basis for the preamble of the independent claims) describes a method and apparatus for determining a position of a liquid jet through the modification of an orientation.

DE 10 2010 011 580 A1 describes an apparatus and method for measuring a fluid jet, in particular used as a light guide.

### SUMMARY OF THE INVENTION

The object of the present invention is achieved by the solution provided in the enclosed independent claims. Advantageous implementations of the present invention are defined in the dependent claims.

In particular, the invention proposes detecting flow characteristic of the fluid jet, based on a laser-induced secondary emission, i.e. based on a secondary electromagnetic radiation generated by an interaction of the laser beam with the fluid jet.

A first aspect of the invention provides an apparatus for machining a workpiece with a high-intensity laser beam, the apparatus being configured to provide a pressurized fluid jet and to couple the laser beam into the fluid jet, wherein the apparatus comprises a detection unit configured to receive and detect secondary radiation generated by the laser beam in the fluid jet, the detection unit including a sensing unit configured to convert secondary radiation into a detection signal, wherein the apparatus is configured to generate, with the detection unit, a plurality of detection signals at a single position or at different positions along the fluid jet, wherein the apparatus further comprises a processing unit configured to determine, based on the plurality of detection signals received from the sensing unit, at least one flow characteristic of the fluid jet.

A "high-intensity" laser beam is a laser beam suited for machining a workpiece, wherein the workpiece may be a made of a material including, for example, metals, ceramics, diamonds, semiconductors, alloys, superalloys, or ultra-hard materials. Thereby, "machining" the workpiece means at least cutting, drilling or shaping the workpiece. The high-intensity laser beam has a laser power of between 20-400 W or even more. The laser beam may thereby be a pulsed laser beam, but can also be a continuous laser beam. A pressure of the "pressurized" fluid jet is preferably between 50-800 bar.

The "length" of the fluid jet may be its usable length starting from a position where it is output from the apparatus, or may be its absolute length starting from a position where it is generated. Having the usable length directly yields the absolute length and vice versa, since the apparatus configuration is known.

The term "along the fluid jet" means along a propagation direction of the fluid jet, or along a direction in which the fluid jet would propagate if it was generated (i.e. its potential propagation direction). The (potential) propagation direction of the fluid jet is well determined by the configuration of the apparatus, particularly by the configuration and orientation of the parts generating the fluid jet, for example, a fluid jet generation nozzle. The generated fluid jet is pressurized enough to propagate linearly, so that the propagation direction of the fluid jet can also be extrapolated beyond its stable length. Accordingly, different positions along the fluid jet can also be selected, if there is no fluid jet present at one or more of these positions.

For generating the plurality of detection signals from a single position, the detection unit may be stationary relative to the parts of the apparatus that generate the fluid jet, for instance, to a fluid jet generation nozzle. Each one of the generated plurality of detection signals can emphasize secondary radiation, which is received from a different portion of the fluid jet, and thus arrives at the sensing unit at a different angle of incidence. This angle of incidence can be taken into account by the sensing unit for generating the plurality of detection signals from the stationary position.

For generating the plurality of detection signals from different positions along the fluid jet, the detection unit may be movable along the fluid jet relative to the parts of the apparatus that generate the fluid jet, for instance, the fluid jet generation nozzle.

The detection unit is preferably positioned such that the sensing unit can detect at least a part of the secondary electromagnetic radiation that is induced by the laser beam in the fluid jet, and that propagates away from the fluid jet in all directions. Notably, some of the laser-induced secondary radiation may travel elsewhere and not into the detection unit.

The secondary radiation received by the detection unit provides an accurate indication of whether a laminar fluid jet is present at a given position along the fluid jet or not. In particular, the signal produced by the sensing unit shows a characteristic behavior depending on whether a laminar fluid jet exists at the given position or not. In fact, the secondary radiation is preferably only generated in such a fluid jet, but not in any continuous flow of fluid or even in fluid droplets. Thus, the secondary radiation can be used to accurately determine the length of the usable fluid jet.

According to the invention, the secondary radiation also allows accurately determining one or more flow characteristics of the fluid jet.

The secondary radiation shows a characteristic behavior depending on the flow characteristics of the fluid jet. For instance, the less perturbed the fluid jet, the more homogeneous the secondary radiation may be generated along the fluid jet. Accordingly, detecting the secondary radiation provides a useful tool for evaluating these characteristics within the fluid jet.

Of note, the secondary radiation, which is able to provide the indication of the length of the fluid jet and the at least one fluid jet flow characteristic, is only generated with a high-intensity laser beam, as necessarily used in an apparatus for machining a workpiece. For instance, a conventional laser pointer device would not generate this secondary radiation in the fluid jet.

The idea of employing the secondary radiation to measure the fluid jet, leads particularly to a simple but precise solution. Further, the apparatus can be compact, although all of its components may advantageously be integrated. The apparatus can carry out the measurements itself, i.e. without requiring external equipment.

In a preferred implementation form of the apparatus, the detection unit further includes a spectral separation unit configured to isolate at least a part of the received secondary radiation onto the sensing unit.

Thus, radiation of interest, which is or includes the at least part of the secondary radiation, can be separated from undesired radiation that would potentially also impinge on the sensing unit, if no spectral separation unit was present. In particular, the spectral separation unit is arranged and configured to receive radiation, which includes the secondary radiation propagating away from the fluid jet, may isolate the radiation of interest from the received radiation, and may provide the radiation of interest to the sensing unit. The spectral separation unit thus prevents that undesired radiation reaches the sensing unit. Such undesired radiation could be ambient light, laser light or other laser-induced secondary radiation not of interest (or of any higher order). When using the spectral separation unit, the detection signals more accurately reflect the radiation of interest, and can thus provide an even more precise indication of whether and where (i.e. at what position(s)) the fluid jet is present.

In a further preferred implementation form of the apparatus, the spectral separation unit includes an optical filter, a prism, a dielectric mirror, a diffraction grating, or a multiple aperture optical setup.

In a further preferred implementation form of the apparatus, the detection unit is stationary and is configured to observe, from its stationary position, a determined length section along the fluid jet, and the apparatus is configured to generate, with the detection unit, the plurality of detection signals at the stationary position of the detection unit.

This specific implementation form allows measuring the fluid jet without a relative movement between the parts of the apparatus that generate the fluid jet and the detection unit. This makes the setup of the apparatus easier. The detection unit has preferably a large or even an unlimited aperture, so as to be able to receive radiation coming from the fluid jet over a large range of angles of incidence. Thus, the detection unit is able to observe at least the determined length section along the fluid jet, preferably even the entire length of an ideal fluid jet (i.e. the maximum length possible for the fluid jet). The sensing unit can generate the plurality of detection signals, for instance, with a plurality of sensing elements arranged at different positions, preferably different positions along the fluid jet. These pluralities of detection signals provide the indication, where along the fluid jet the secondary radiation is generated. Thus, a length of the fluid jet can be determined with high precision.

In a further preferred implementation form of the apparatus, the sensing unit is a charge-coupled device or a spatial array of multiple photodiodes, thermal diodes or avalanche diodes (or any other photo detector suitable).

The spatial arrangement of multiple such diodes allows generating the plurality of detections signals. For instance, one detection signal per diode maybe generated, such that the detection signal provides an indication about the secondary radiation generated along the fluid jet, specifically over the determined length section along the fluid jet, which can be observed by the sensing unit. The sensing unit of this implementation form is advantageous for a stationary detection unit.

In a further preferred implementation form of the apparatus, the apparatus further comprises a motion unit configured to move the detection unit along the fluid jet, wherein the detection unit includes an observation unit arranged to admit secondary radiation propagating towards the sensing unit, and the apparatus is configured to generate, with the detection unit, the plurality of detection signals at different positions along the fluid jet.

This specific implementation form allows measuring the fluid jet with a relative movement between the parts of the apparatus that generate the fluid jet and the detection unit, namely by moving the detection unit. Notably, the detection unit being movable along the fluid jet does not mean that its direction of movement is parallel to the propagation direction of the fluid jet. The direction of movement of the detection unit can also be at an angle to the propagation direction of the fluid jet. The movement direction of the detection unit must not even be straight. This is because any angular displacement to the propagation direction of the fluid jet can be easily corrected, e.g. by signal processing of the plurality of detection signals. Of course, the direction of movement of the detection unit can also be parallel to the propagation direction of the fluid jet. Again, as mentioned above, the propagation direction of the fluid jet does not depend on or require the presence of a fluid jet, but is determined by the configuration of the apparatus.

The motion unit is preferably configured to generate one detection signal for each different position along the fluid jet. However, it is also possible that it is configured to generate multiple detection signals for one and the same position along the fluid jet.

The observation unit preferably limits the aperture of the detection unit, in order to increase the spatial resolution of sensing radiation along the fluid jet. A detection signal can thus more precisely reflect the secondary radiation generated in the fluid jet at a given position along the fluid jet.

In a further preferred implementation form of the apparatus, the detection unit is configured to continuously or repeatedly detect secondary radiation and thereby generate the plurality of detection signals, while being moved by the motion unit along the fluid jet.

In this manner, a precise measurement of the fluid jet, i.e. of the secondary radiation generated in the fluid jet along the fluid jet, can be carried out.

In a further preferred implementation form of the apparatus, the motion unit is configured to move the detection unit over at least a determined distance between a first reference point and a second reference point along the fluid jet.

The determined distance should be at least as large as the length of a fluid jet that is necessary to machine a workpiece efficiently. The first reference point is preferably as close as possible to the parts of the apparatus that generate and/or output the fluid jet.

Most preferably, the first reference point is at a fluid exit aperture or nozzle of the part of the apparatus, in which the fluid jet is generated.

In a further preferred implementation form of the apparatus, the determined distance is between 0-25 cm, preferably is between 0-15 cm.

This allows a large enough measuring range, longer even than the length of an ideal fluid jet.

In a further preferred implementation form of the apparatus, the motion unit is configured to move the detection unit stepwise along the fluid jet with a spatial resolution of less than 2 mm, preferably of between 10 µm - 2 mm.

In this manner, a very precise and high-resolution measurement of the fluid jet, i.e. of the secondary radiation generated along the fluid jet, is possible.

In a further preferred implementation form of the apparatus, the observation unit is an opening or tele-centric lens defining an aperture.

The opening is, for example, realized as a slot, which preferably extends perpendicular to the propagation direction of the fluid jet. That is, a horizontal slot if the fluid jet propagates along the vertical direction. The (limited) aperture improves the spatial resolution of the measurements of the secondary radiation generated along the fluid jet.

In a further preferred implementation form of the apparatus, an optical resolution of the detection unit along the fluid jet is defined by the size of the aperture and a distance between the observation unit and the fluid jet, and the size of the aperture and said distance are selected such that the optical resolution of the detection unit is equal to or higher than the spatial resolution of the motion unit.

Thus, the accuracy of the measurements along the fluid jet is not limited by the optical resolution, and can be carried out very accurately with a precise linear motion unit, for instance, having the above-mentioned spatial resolution of less than 2 mm.

In a further preferred implementation form of the apparatus, the sensing unit includes a photodiode, thermal diode or an avalanche diode (or any other photo detector suitable).

Accordingly, simple and rather inexpensive parts can be used for the sensing unit, in order to realize the detection unit. The sensing unit of this implementation form is advantageous for a movable detection unit.

In a further preferred implementation form of the apparatus, the detection unit further includes a protection unit for protecting the observation unit from ingress of fluid, humidity, dust and further products of laser beam machining.

Accordingly, the lifetime of the detection unit is increased, the detection unit has to be cleaned less often, and is able to provide more reliable measurements.

In a further preferred implementation form of the apparatus, the protection unit includes a unit configured to produce an overpressure within at least the observation unit of the detection unit.

The overpressure prevents that unwanted machining process products and/or fluid enter the observation unit. Even if some unwanted products or fluid should enter, the overpressure produced by the unit will again expel them from the observation unit.

In a further preferred implementation form of the apparatus, the protection unit includes a transparent window covering the observation unit towards the fluid jet.

Notably, the window is preferably transparent at least for the secondary radiation that is of interest. It may not be transparent to all incoming radiation, and can thus additionally act as a spectral separation unit (similar as described above). Preferably, the transparent window is provided with at least one flap, in order to selectively open and close it for access to the detection unit.

In a further preferred implementation form of the apparatus, the apparatus further comprises a movable machining unit configured to provide the pressurized fluid jet and to couple the laser beam into the fluid jet, wherein the detection unit is stationary and includes the sensing unit and an observation unit arranged to admit secondary radiation propagating towards the sensing unit, and the apparatus is configured to move the machining unit, in order to generate, with the detection unit, the plurality of detection signals at different positions along the fluid jet.

This specific implementation form allows measuring the fluid jet with a relative movement between the parts of the apparatus that generate the fluid jet and the detection unit, namely by moving said parts, for instance, the fluid jet generation nozzle or a machining unit including said nozzle. Otherwise, this implementation form works in a similar manner as the specific implementation form with a movable detection unit described above. Of course, it is also possible to make both the detection unit and the machining unit movable.

In a further preferred implementation form of the apparatus, the detection unit further includes at least one optical element or assembly arranged between the observation unit and the sensing unit.

This element or assembly can be used to shape or change the direction of the admitted secondary radiation. For instance, if the aperture of the observation unit is relatively small, in order to increase the optical resolution of the detection unit, said element or assembly can disperse the received radiation onto a spectral separation unit or the sensing unit. Alternatively, the element or assembly can focus the received radiation if necessary. Accordingly, the measurement efficiency and performance of the detection unit can be further improved.

In a further preferred implementation form of the apparatus, the secondary radiation is electromagnetic radiation generated by inelastic scattering and/or fluorescence of the laser beam in the fluid jet.

Inelastic scattering is particularly Raman scattering of the laser beam in the fluid jet, and is the preferred laser-induced secondary radiation for measuring the fluid jet.

In a further preferred implementation form of the apparatus, the secondary radiation is laser light scattered in the fluid jet.

Scattering of the laser beam is possible, if the total internal reflection condition is not fulfilled, due to any fluid jet imperfection. Accordingly, an indication for the length of the fluid jet able to provide internal reflection is provided by this secondary radiation.

In a further preferred implementation form of the apparatus, the processing unit is configured to determine a length of the fluid jet based on the plurality of detection signals received from the sensing unit.

The processing unit can process the generated detection signals, and can evaluate where (i.e. at which position(s)) secondary radiation is generated along the fluid jet and preferably also in what amount (i.e. its intensity). From this information, the processing unit can precisely determine a fluid jet length, particularly the usable fluid jet length. The processing unit may then use the obtained information to instruct other units of the apparatus to perform specific actions. For instance, the processing unit could control a laser unit generating the laser beam to stop, if there is no fluid jet or it could control a pressure of the fluid supplied for generating the pressurized fluid jet, if the fluid jet length is not sufficient. Further, it could send a signal to the operator.

In a further preferred implementation form of the apparatus, the processing unit is configured to determine, based on the plurality of detection signals received from the sensing unit, a power of the laser beam coupled into the fluid jet.

The amount and distribution of the secondary radiation along the fluid jet provides information about the laser power that is coupled by the laser beam into the fluid jet. Typically, not all of the nominal laser power provided by a laser unit for the laser beam necessarily couples into the fluid jet. However, it is advantageous for providing an efficient machining process to determine, how much of the nominal laser power is guided in the fluid jet onto the workpiece. Usually, such measurements are conducted with external power meters or the like. In comparison, the measurement of the secondary radiation and the further determination of the laser power in the fluid jet from the secondary radiation is faster and more efficient.

A second aspect of the present invention provides a method for measuring a pressurized fluid jet guiding a high-intensity laser beam for machining a workpiece, the method comprising providing the fluid jet and coupling the laser beam into the fluid jet, receiving and detecting, with a detection unit, secondary radiation generated by the laser beam in the fluid jet, wherein the detecting includes, converting, with a sensing unit, secondary radiation into a detection signal, generating, with the detection unit, a plurality of detection signals at a single position or at different positions along the fluid jet, and determining, with a processing unit, based on the plurality of detection signals received from the sensing unit, at least one flow characteristic of the fluid jet.

With the method of the second aspect, the same advantages and effects can be achieved as described above for the apparatus of the first aspect.

Notably, a method step carried out "with" some unit particularly means that the method step is carried out "by" that unit.

In a preferred implementation form of the method, the method further comprises moving the detection unit along the fluid jet, in order to generate the plurality of detection signals at different positions along the fluid jet.

This implementation form accordingly achieves the same advantages as described above for the apparatus with movable detection unit. As for the apparatus, of course also for the method it is alternatively possible to relatively move the detection unit along the fluid jet, by moving the fluid jet, i.e. moving a component that generates the fluid jet.

In a further preferred implementation form of the method, the method further comprises, defining, with the processing unit, a first reference value, generating, with the detection unit, a first detection signal at a first position along the fluid jet, comparing, with the processing unit, the first detection signal with the first reference value, and generating an alarm and/or interrupting the method, if the first detection signal is below the first reference value.

The first position is preferably a referenced position, i.e. its distance to the point of generation of the fluid jet is known. Preferably, the first position coincides with the first reference point mentioned above. The first reference value is thus used as an emergency alarm or stop. The situation that the first detection signal, which is preferably obtained from as close to the exit aperture or exit nozzle for outputting the fluid jet as possible, is therefore capable to serve as an indicator of one and/or several problems, e.g. a broken fluid jet generation nozzle. The fluid jet does in this case not have any usable length. Notably, those implementation forms of the apparatus, in which the plurality of detection signals are obtained at different positions along the fluid jet, are configured to perform this implementation form of the method.

In a further preferred implementation form of the method, the method further comprises defining, with the processing unit, a second and/or third reference value, generating, with the detection unit, a further detection signal at a further position along the fluid jet, comparing, with the processing unit, the further detection signal with a first product of the first detection signal and the second reference value and/or comparing the further detection signal with a second product of the first detection signal and the third reference value, determining the length of the fluid jet based on the distance between the first position and the further position, if the further detection signal is smaller than the first product or larger than the second product, and repeating the obtaining and comparing steps, if the further detection signal is equal to or larger than the first product and/or equal to or smaller than the second product.

If the further detection signal is smaller than the first product or larger than the second product, the fluid jet cannot be longer than a distance of the further position from the origin of the fluid jet, for instance, from the fluid jet generation nozzle. Since the first positions is preferably a known position, for instance coinciding with the above-mentioned first reference point of which the distance to the origin of the fluid jet is known, the usable fluid jet length can be determined. In this way, by using the second and/or third reference values, a precise length measurement of particularly the usable fluid jet length is enabled. The measurement and processing of the results is simple and fast. Notably, those implementation forms of the apparatus, in which the plurality of detection signals are obtained at different positions along the fluid jet, are configured to perform this implementation form of the method.

These optimized reference values provide a robust but precise method.

### BRIEF DESCRIPTION OF DRAWINGS

The above-described aspects and preferred implementation forms of the present invention are explained in the following description of specific embodiments in relation to the enclosed drawings, in which
FIG. 1 shows an apparatus according to an embodiment of the present invention.
FIG. 2 shows an apparatus according to an embodiment of the present invention.
FIG. 3 shows an apparatus according to an embodiment of the present invention.
FIG. 4 shows an apparatus according to an embodiment of the present invention.
FIG. 5 shows an apparatus according to an embodiment of the present invention.
FIG. 6 shows an apparatus according to an embodiment of the present invention.
FIG. 7 shows a method according to an embodiment of the present invention.

### DETAILED DESCRIPTION OF EMBODIMENTS

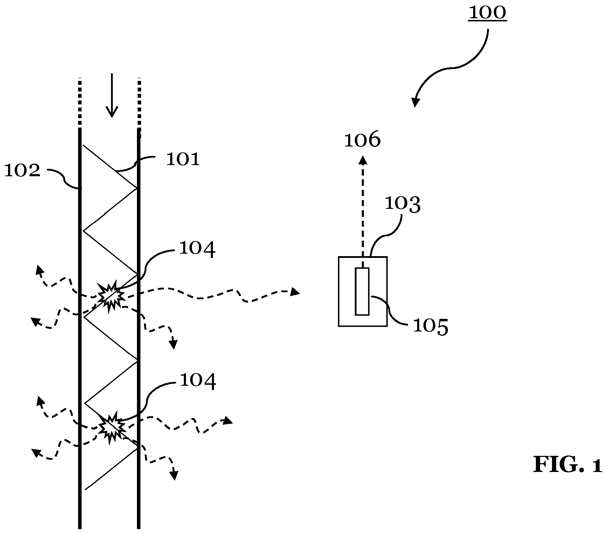

FIG. 1 shows an apparatus 100 according to an embodiment of the present invention. The apparatus 100 is configured to machine a workpiece with a high-intensity laser beam 101 coupled into a pressurized fluid jet 102. To this end, the apparatus 100 is configured to provide the fluid jet 102, and to couple the laser beam 101 into the fluid jet 102. The laser beam 101 may be pulsed or continuous. During the machining process, the workpiece may be positioned on a machining surface, which may or may not be part of the apparatus 100. In either case, the apparatus 100 can be arranged such that it is able to machine the workpiece disposed on the machining surface. The apparatus 100 may thereby control movements of the machining surface in up to three dimensions.

However, the apparatus 100 of the invention is particularly for measuring the fluid jet 102 guiding the laser beam 101. Accordingly, the components of the apparatus 100 required for this purpose are shown in FIG .1. In particular, the apparatus 100 comprises a detection unit 103, which includes a sensing unit 105.

The detection unit 103 is configured to receive and detect secondary radiation 104 generated by the laser beam 101 in the fluid jet 102. The laser beam 101 induces the secondary radiation 104 particularly by interacting with the fluid of the fluid jet 102, and advantageously only in the laminar fluid jet 102 but not in an unstable liquid flow or droplets. That is, the secondary radiation 104 is generated along the entire length of the fluid jet 102. The generated secondary radiation 104 propagates away from the fluid jet 102 in all directions, as is indicated in FIG. 1. The detection unit 103 is accordingly arranged to receive at least a part of all the secondary radiation 104 generated in the fluid jet 102.

The sensing unit 105 is configured to convert secondary radiation 104 into a detection signal 106. The converted secondary radiation 104 may be all secondary radiation 104 received by the detection unit 103, or may be a part of the received secondary radiation 104. The detection signal 106 is preferably an electrical signal. The sensing unit 105 is able to produce a plurality of detection signals 106, for instance, every time it receives secondary radiation 104. This could be the case, if the laser beam 101 is pulsed. The sensing unit 105 may in this case convert the secondary radiation 104 generated by each laser pulse into at least one detection signal 106. However, the sensing unit 105 may also be able to generate multiple detection signals 106 in determined time intervals. That is, even when the laser beam 101 is not pulsed but continuous, the sensing unit 105 may constantly receive secondary radiation 104 and convert it into a plurality of detection signals 106, each detection signal 106 at a different point in time. The sensing unit 105 may also produce multiple detection signals 106 concurrently, for instance, with a plurality of sensing elements it includes, wherein each sensing element is configured to convert secondary radiation 104 into a detection signal 106.

The apparatus 100 is specifically configured to generate, with the detection unit 103, a plurality of detection signals 106 at a single position or at different positions along the fluid jet 102. That is, the detection unit 103 may be movable relative to the fluid jet 102, and the sensing unit 105 may produce at least one detection signal 106 each determined time interval and/or after each step of movement. The detection unit 103 may also be stationary with respect to the fluid jet 102, and the sensing unit 105 may produce a plurality of detection signals 106 each determined time interval and/or simultaneously with a plurality of sensing elements.

In each case, the plurality of detection signals 106 derived from the secondary radiation 104 provide an indication of the usable length of the fluid jet 102 and the flow characteristics of the fluid jet 102.

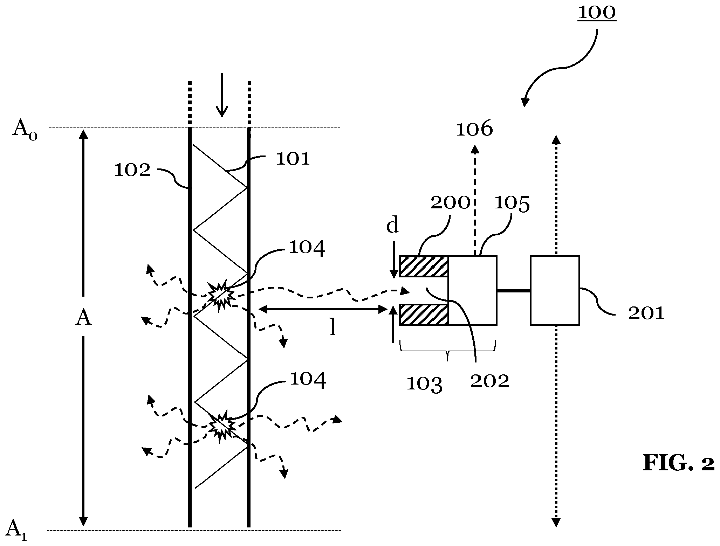

FIG. 2 shows an apparatus 100 according to an embodiment of the present invention, which builds on the apparatus 100 shown in FIG. 1. Identical elements in FIG. 2 and FIG. 1 are labeled with the same reference signs and function likewise. Accordingly, the apparatus 100 of FIG. 2 also comprises the detection unit 103, which is configured to receive and detect secondary radiation 104 coming from the fluid jet 102 guiding the laser beam 101. Particularly, it also comprises the sensing unit 105, which is configured to convert the received secondary radiation 104 into the plurality of detection signals 106.

The apparatus 100 shown in FIG. 2 further includes a motion unit 201, which is configured to move the detection unit 103 along the fluid jet 102. In particular, the motion unit 201 is configured to move the detection unit 103 over at least a determined distance A, preferably between a first reference point A₀ and a second reference point A₁, along the fluid jet 102. The determined distance A is preferably 0-25 cm, more preferably between 0-15 cm. The determined distance A is obtained in the propagation direction of the fluid jet 102. Notably, the motion unit 201 is also configured to move the detection unit 103 along that determined distance A, if there is no fluid jet 102. The movement direction applied by the motion unit 201 is indicated in FIG. 2, and is schematically shown to be parallel to the determined distance A, i.e. to the propagation direction of the fluid jet 102. However, such a parallel alignment is in practical implementations possible, but not necessary. Notably, the propagation direction of the fluid jet 102 is in use of the apparatus 100 often along the vertical direction to be directed onto an at least horizontally movable workpiece. However, since the fluid jet 102 is pressurized, it can also propagate at an angle to the vertical direction, or even along the horizontal direction, without becoming significantly non-linear. The motion unit 201 may be particularly configured to move the detection unit 103 stepwise along the fluid jet 102, with a spatial resolution of less than 2 mm, preferably of between 10 µm - 2 mm. Alternatively, the motion unit 201 may also be instructed to move the detection unit 103 continuously along the fluid jet 102.

The apparatus 100 of FIG. 2 is accordingly configured to generate, with the detection unit 103 including the sensing unit 105, the plurality of detection signals 106 at different positions along the fluid jet 102. Preferably, the detection unit 103 is configured to continuously or repeatedly detect secondary radiation 104 and thereby generate the plurality of detection signals 106, while being moved by the motion unit 201 along the fluid jet 102. The sensing unit 105 is or includes preferably a photodiode, thermal diode or an avalanche diode. It is also possible for the sensing unit 105 to be a power-meter or a spectrometer.

Beneficial for the movable detection unit 103 is that it also includes an observation unit 200, which is configured to admit secondary radiation 104 received from the fluid jet 102 propagating towards (in direction of) the sensing unit 105. The observation unit 200 may be an opening, like a slot or a tele-centric lens which define an aperture 202. The aperture 202 limits the angle of incidence at which the detection unit 103 can receive secondary radiation 104 from the fluid jet 102. Accordingly, the observation unit 200 increases the optical resolution along the fluid jet 102.

For instance, the aperture 202 may have a size (diameter or a slot with an opening) d along the fluid jet 102. An optical resolution of the detection unit 103 along the fluid jet 102 is then defined by the size d of the aperture 202 and a distance *l* between the observation unit 200 and the fluid jet 102. The size d of the aperture 202 and said distance *l* are preferably selected such that the optical resolution of the detection unit 103 is equal to or higher than the spatial resolution of the motion unit 201. As an example, the size d may be a slot with 1-5 mm width, preferably 1.5 mm width, and 5-10 mm length. Alternatively, it may be a diameter of 1-5 mm, preferably 1.5 mm. The distance *l* may be between 5-30 mm, preferably between 10-15 mm.

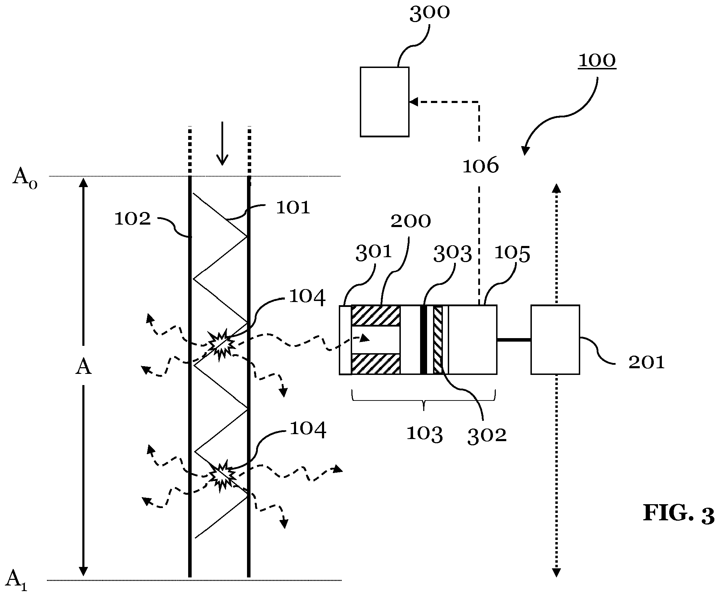

FIG. 3 shows an apparatus 100 according to an embodiment of the present invention, which builds on the apparatus 100 shown in FIG. 2. Identical elements in FIG. 3 and in FIG. 2 are labeled with the same reference signs and function likewise. In particular, the apparatus 100 in FIG. 3 has also a motion unit 201, and thus also a movable detection unit 103. Compared to FIG. 2, further advantageous components of the apparatus 100 are shown in FIG. 3. These additional components are optional, and can be added to the apparatus of FIG. 2 individually or in any combination.

In particular, the apparatus 100 of FIG. 3 further includes a spectral separation unit 303, which is configured to isolate at least a part of the secondary radiation 104 received by the detection unit 103 onto the sensing unit 105. The spectral separation unit 303 is thus preferably arranged in the optical path between the fluid jet 102 and the sensing unit 105, such that it receives secondary radiation 104 travelling away from the fluid jet 102 through the observation unit 200, and outputs radiation of interest - which includes at least the part of the secondary radiation 104 - onto the sensing unit 105. The spectral separation unit 303 may be an optical filter unit, which may consist of one or more optical filters and is configured to filter out undesired electromagnetic radiation. That is, it is configured to prevent electromagnetic radiation of certain (undesired) wavelengths from reaching the sensing unit 105. Other electromagnetic radiation that accidently reaches the spectral separation unit 303 - and would reach the sensing unit 105 without the spectral separation unit 303 - is accordingly filtered out.

The spectral separation unit 303 may, for instance, be configured to prevent laser light reaching the sensing unit 105. That is, the spectral separation unit 303 may be configured to filter out light of the same wavelength than provided by a laser unit generating the laser beam 101. Further, also laser-induced secondary radiation that is not of interest may be filtered out. There may even be different mechanisms producing secondary radiation 104 that in principle provides an indication about the usable fluid jet length, but only secondary radiation 104 attributed to one specific mechanism is currently of interest. In this case, the spectral separation unit 303 may filter out secondary radiation currently not of interest.

The secondary radiation 104 may be electromagnetic radiation generated by inelastic scattering of the laser beam 101 in the fluid jet 102. That is, it may be radiation caused by Raman scattering of the laser beam 101, which is typically shifted to longer wavelengths compared to the wavelength of the initiating laser light. For instance, this secondary radiation 104 is from the red spectrum, if the laser light is from the green spectrum. Accordingly, the spectral separation unit 303 may in this case be configured to allow light from the red spectrum to reach the sensing unit 105, while it blocks light from other parts of the spectrum, especially the laser light from the green spectrum. Thus, only the secondary radiation 104 may reach the sensing unit 105. Also the sensing unit 105 can in this case be configured to be particularly sensitive to the red spectrum. As an example, the laser light may be at 532 nm, and the bandpass of the spectral separation unit 303 may here be 600-700 nm, preferably 630-670 nm.

Secondly, the secondary radiation 104 may be fluorescence of the laser beam 101 in the fluid jet 102. Accordingly, the spectral separation unit 303 may be configured to allow light from the fluorescence spectrum to reach the sensing unit 105, while it blocks light from other parts of the spectrum, especially the laser light e.g. from the green spectrum or a secondary radiation generated from Raman scattering of the laser light. The sensing unit 105 can in this case be configured to be particularly sensitive to the fluorescence spectrum. The fluorescence spectrum may, for instance, be in the yellow range in case of a green laser, particularly between 560-640 nm.

Thirdly, the secondary radiation 104 may be laser light scattered in the fluid jet 102. Since the laser light is preferably from the green spectrum, the spectral separation unit 303 may in this case be configured to allow light from the green spectrum to reach the sensing unit 105, while it blocks light from other parts of the spectrum. The sensing unit 105 can in this case be configured to be particularly sensitive to the green spectrum. For example, for laser light at 532 nm, the bandpass of the spectral separation unit 303 may here be 500-600 nm, preferably 510-550 nm.

The detection unit 103 of the apparatus 100 of FIG. 3 has further a protection unit 301 for protecting the observation unit 200 from ingress of fluid, humidity, dust and/or further products of laser beam machining. The protection unit 301 may be or include a unit configured to produce an overpressure within at least the observation unit 200 of the detection unit 103. The protection unit 301 may also be or include a transparent window covering the observation unit 200 towards the fluid jet 102. The window may have a movable protection unit.

The detection unit 103 of the apparatus 100 of FIG. 3 is further equipped with at least one optical element or assembly 302 arranged between the observation unit 200 and the sensing unit 105. This optical element or assembly 302 maybe a lens, filter, prism, grating or a combination thereof, and may function to shape or influence the radiation admitted into the detection unit 103 by the observation unit 200, and/or the radiation isolated by the spectral separation unit 303.

The apparatus 100 of FIG. 3 also includes a processing unit 300, which is configured to receive the detection signals 106 from the sensing unit 105. The processing unit 300 is configured to process the detection signals 106, and to determine an absolute and/or usable length of the fluid jet 102 based on the plurality of detection signals 106 received from the sensing unit 105. To this end, the processing unit 300 may particularly be configured to carry out, by controlling the apparatus 100, a method of measuring the fluid jet 102 according to an embodiment of the present invention. This method is described further below. The processing unit 300 is according to the invention configured to determine, based on the plurality of detection signals 106 received from the sensing unit 105, at least one flow characteristic of the fluid jet 102 and optionally a power of the laser beam 101 coupled into the fluid jet 102.

The processing unit 300 is, for example, realized by a microprocessor or computer, and may apply signal processing on the detection signals 106. Signal processing may include, for example, scaling, averaging, recording over time, integrating over time, or converting the detection signals 106, and may include comparing the detection signals 106 - or an averaged or integrated signal - with one or more reference values. The processing unit 300 is also configured to set and change reference values, with which the detection signals 106 can be compared. The processing unit 300 may also be configured to record a plurality of detection signals 106, and to compare the recorded signals 106 with pre-stored reference values. The processing unit 300 may alternatively or additionally be configured to integrate a plurality of detection signals 106 over time, in order to produce an integrated signal, and to evaluate a pattern or a change of a pattern in the integrated signal 106. The plurality of detection signals 106 may arise from laser-pulse induced secondary radiation 104 sensed by the sensing unit 105, if the laser beam 102 is a pulsed laser beam.

Specifically, the processing unit 300 may be configured to define a first reference value, and compare a first detection signal 106 generated by the detection unit 103 at a first position along the fluid jet 102 with the first reference value. It may further generate an alarm and/or shut down the apparatus 100, or may at least instruct another unit of the apparatus 100 to do so, if the first detection signal 106 is below the first reference value.

The processing unit 300 may be further configured to define a second and/or third reference value, and compare a further detection signal 106 generated by the detection unit 103 at a further position along the fluid jet 102 with a first product of the first detection signal 106 and the second reference value, and/or with a second product of the first detection signal 106 and the third reference value. The processing unit 300 may further be configured to determine that the distance between the first position and the further position is the length of the fluid jet 102, if the further detection signal 106 is smaller than the first product or larger than the second product. The processing unit 300 may also be configured to instruct the detection unit 103 to repeat the steps of obtaining of the detection signals 106, and to repeat the comparing steps, if the further detection signal 106 is equal to or larger than the first product and/or equal to or smaller than the second product.

The processing unit 300 may advantageously be configured to set the second reference value is between 5-95%, preferably between 20-80% and/or the third reference value is between 105-300%, preferably between 140-260%.

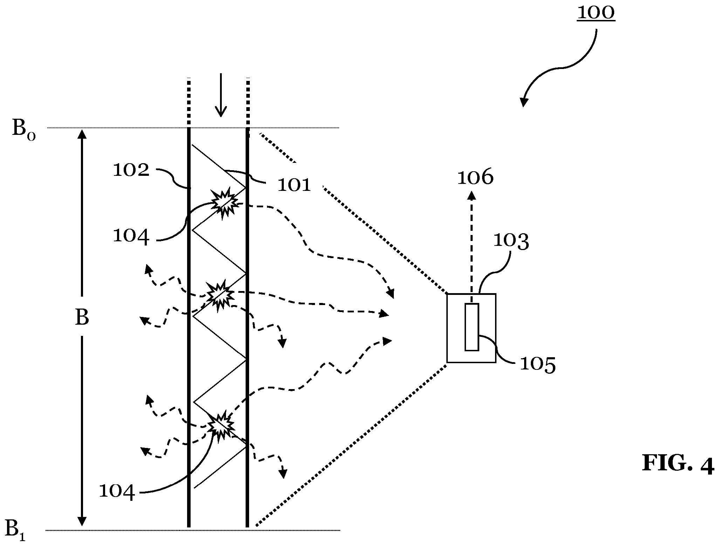

FIG. 4 shows an apparatus 100 according to an embodiment of the present invention, which builds on the apparatus 100 shown in FIG. 1. Identical elements in FIG. 4 and FIG. 1 are labeled with the same reference signs and function likewise. Accordingly, the apparatus 100 of FIG. 4 includes the detection unit 103, which includes the sensing unit 105, and is configured to receive and detect secondary radiation 104 coming from the fluid jet 102 guiding the laser beam 101, particularly to convert the detected secondary radiation 104 into the plurality of detection signals 106.

The apparatus 100 shown in FIG. 4 is configured to generate, with the detection unit 103, the plurality of detection signals 106 at a single position of the detection unit 103. Preferably, the detection unit 103 is therefore stationary, and the apparatus 100 is configured to generate the detection signals 106 at the stationary position of the detection unit 103. In this case, as shown in FIG. 4, the apparatus 100 does not include a motion unit 201. However, it is also possible that the apparatus 100 of FIG. 4 includes a motion unit 201 and accordingly a movable detection unit 103, but is nevertheless configured to generate the detection signals 106 at a single (in this case preferably a pre-determined) position. The apparatus 100 may also be configured to generate the plurality of detection signals 106 at a single position (in one mode of operation), and generate the plurality of detection signals 106 at different positions along the fluid jet 102 (in another mode of operation).

Since the detection unit 103 in FIG. 4 is stationary, it is further configured to observe, from its stationary position, a determined length section B along the fluid jet 102 between reference points B₀ and B₁. This length section B may be identical to the predetermined distance A, over which the motion unit 201 is able to move the detection unit 103 in the apparatus 100 of FIG. 2. The reference points B₀ and B₁ may also be the same as A₀ and A₁, respectively. Accordingly, the length section B is preferably between 0-25 cm, and is preferably between 0-15 cm. To this end the detection unit 103 may have a large enough aperture along the fluid jet 102 (larger than the aperture 202 shown in FIG. 2) or even an unlimited aperture. That is, the detection unit 103 preferably does not include an observation unit 200. And if it does include an observation unit 200 - which is possible - it includes an observation unit 200 with an aperture 202 of a size d, which is large enough to observe B.

The sensing unit 105 of the apparatus 100 in FIG. 4 is preferably a charge-coupled device or a spatial array of multiple photodiodes, thermal diodes or avalanche diodes, in order to produce the plurality of detection signals 106. Preferably, each diode or sensing element of the charge-coupled device produces one detection signal 106. These detection signals 106 arise from the sensing unit 105 receiving secondary radiation 104 stemming from anywhere in the fluid jet 102 within the determined length section B. From each position along the fluid jet 102, at which secondary radiation 104 is generated by the laser beam 101, the secondary radiation 104 reaches the sensing unit 105 under a different angle and over a different distance. Accordingly, the sensing unit 105, especially when it has multiple diodes or sensing elements, produces the detection signals 106 with a characteristic pattern (e.g. relation between detection signals 106), which provides an indication of the length of the usable fluid jet 102.

Of note, the apparatus 100 shown in FIG. 4 may further include one or more of the features introduced in FIG. 3. That is, also the apparatus 100 of FIG. 4 may have the processing unit 300 for processing the detection signals 106. Further, it may have the protection unit 301, spectral separation unit 303 and/or optical element or assembly 302 in the detection unit 103.

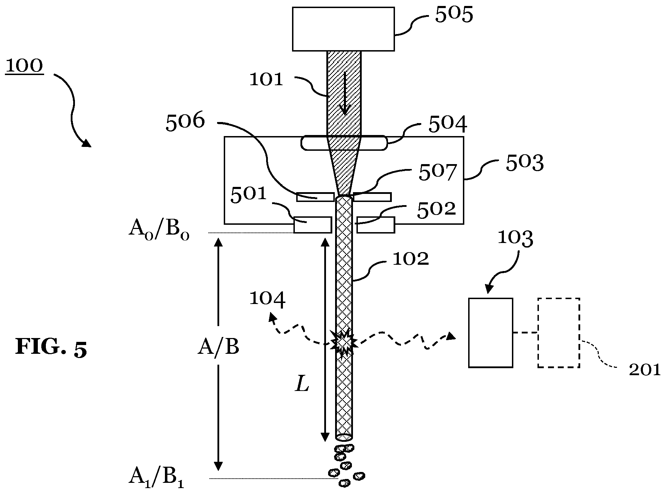

FIG. 5 shows an apparatus 100 according to an embodiment of the present invention, which builds on the apparatus 100 shown in FIG. 1, FIG. 2 or FIG. 4. Identical elements in FIG. 1, 2 or 4 and in FIG. 5 are labeled with the same reference signs and function likewise. The motion unit 201 is optional and thus shown in dashed lines.

FIG. 5 shows more details about the optical arrangement and fluid circuitry of the apparatus 100, which may be provided in a machining unit 503. The machining unit 503 may particularly include an optical element, like a lens 504, for coupling the laser beam 101 into the fluid jet 102. The laser beam 101 is produced by a laser unit 505 located outside of the machining unit 503, and is injected into the machining unit 503. The machining unit 503 may also include an optically transparent protection window (not shown), in order to separate the optical arrangement, here exemplarily the optical element 504, from the fluid circuitry and the region of the machining unit 503 where the fluid jet 102 is produced. For producing the fluid jet 102, the machining unit 503 may include a fluid jet generation nozzle 506 having a fluid nozzle aperture 507. The fluid jet generation nozzle 506 is disposed within the machining unit 503 to produce the fluid jet 102 in a protected environment. The fluid nozzle aperture 507 defines the width of the fluid jet 102. The fluid nozzle aperture 507 has preferably a diameter of 10-200 µm, and the fluid jet 102 has preferably a diameter of about 0.6-1 times the fluid nozzle aperture 507. The pressure for the pressurized fluid jet 102 is provided via an external fluid supply. Preferably, the pressure is between 50-800 bar. For outputting the fluid jet 102 from the apparatus 100, the machining unit 503 preferably includes an exit nozzle 501 with an exit aperture 502. The exit aperture 502 is preferably wider than the fluid nozzle aperture 507.

FIG. 5 also illustrates the determined distance/length A/B between the reference points A₀/B₀ and A₁/B₁ (compare FIG. 2 and 4, respectively) in relation to a length L of the fluid jet 102. Here in FIG. 5, the first reference point A₀/B₀ is preferably directly at the exit nozzle 501 of the machining unit 503, i.e. as close to the machining unit 503 as possible. The length L shown in FIG. 5 is the usable length of the fluid jet 102 between the exit nozzle 501 - here coinciding with the first reference point A₀/B₀ - and the position where the fluid jet 102 becomes unstable and disperses into droplets. Notably, also the absolute length of the fluid jet 102 starting from the fluid jet's origin, i.e. the fluid jet generation nozzle 506, may be determined, because the distance between the fluid jet generation nozzle 506 and the exit nozzle 501 is known. If the first reference point A₀/B₀ does not coincide with the exit nozzle 501, then preferably the distance of the first reference point A₀/B₀ relative to the exit nozzle 501 is known. The distance between the first reference point A₀/B₀ and the second reference point A₁/B₁ is also known. Accordingly, the usable length L of the fluid jet 102 can be derived from a relative length of the fluid jet 102 to these reference points Ao/Bo and A₁/B₁, respectively.

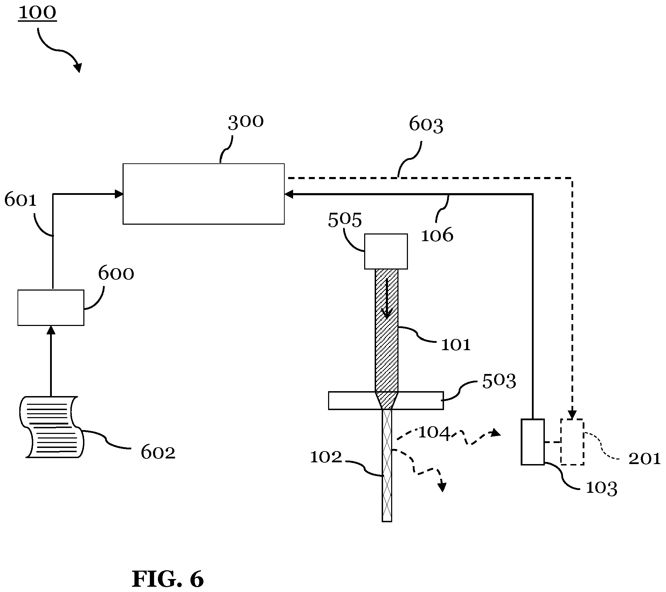

FIG. 6 shows an apparatus 100 according to an embodiment of the present invention, which builds on the apparatus 100 shown in FIG. 3 and FIG. 5. Identical elements in FIG. 3 or FIG. 5 and FIG. 6 are labeled with the same reference signs and function likewise. Accordingly, also the apparatus 100 of FIG. 6 includes the detection unit 103 configured to convert the secondary radiation 104 coming from the fluid jet 102, into the plurality of signals 106. The fluid jet 102 carries the laser beam 101, which is exemplarily generated by the laser unit 505 and coupled into the fluid jet 102 in a machining unit 503. The detection unit 103 may be movable by the motion unit 201 (optional, thus shown with dashed line).

The apparatus 100 in FIG. 6 shows in more detail the processing unit 300, which receives the detection signals 106 from the detection unit 103. As mentioned above with respect to FIG. 3, the processing unit 300 may be configured to determine a first reference value and a second and/or third reference value, in order to compare with the detection signals 106. The apparatus 100 may to this end also include a human-machine interface (HMI) 600, which a user of the apparatus 100 can provide with an input 602, like a script. The HMI 600 may be configured to transmit, based on the user input 602, the first, second and/or third reference value to the processing unit 300 via signal 601.

The processing unit 300 may be further configured to instruct the motion unit 201, if present, via instruction signal 603, to move the detection unit 103 along the fluid jet 102.

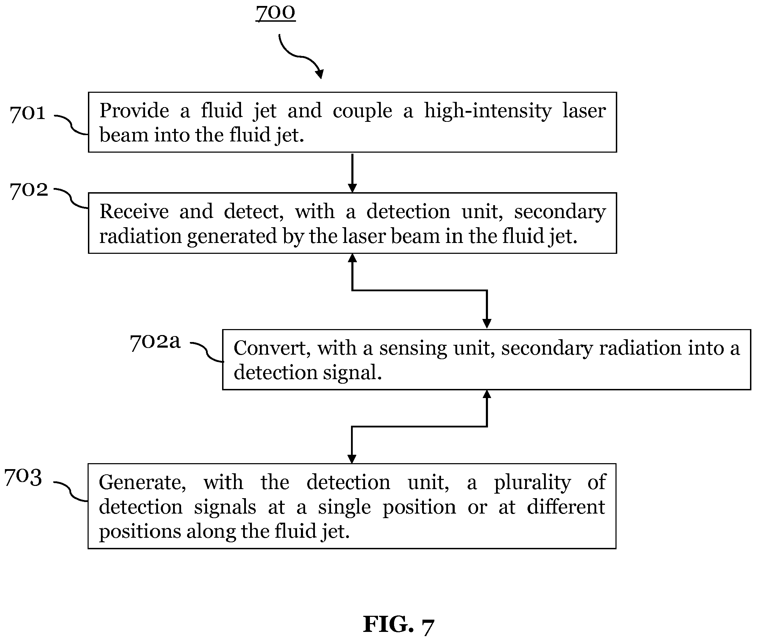

FIG. 7 shows a method 700 according to an embodiment of the invention. The method 700 may be carried out by the apparatus 100 as shown in one of the FIGs. 1-6, respectively. The method includes a step 701 of providing a fluid jet 102 and coupling a high-intensity laser beam 101 into the fluid jet 102. This can, for example, be done with the machining unit 503 and laser unit 505, respectively, as shown in FIG. 4 Further, it includes a step 702 of receiving and detecting, with a detection unit 103, secondary radiation 104 generated by the laser beam 101 in the fluid jet 102. The detecting step 702 may include a step 702a of converting, with a sensing unit 105, secondary radiation 104 into a detection signal 106. The method 700 then further includes a step 703 of generating, with the detection unit 103, a plurality of detection signals 106 at a single position or at different positions along the fluid jet 102.

The method 700 may further comprise a step of moving the detection unit 103 along the fluid jet 102, in order to generate the plurality of detection signals 106 at different positions along the fluid jet 102. This implementation of the method 700 may be carried out with an apparatus 100 including a motion unit 201. The method 700 can also include applying, with a processing unit 300, an algorithm to the detection signals 106, in order to determine a length of the fluid jet 102 or to determine flow properties of the fluid jet 102. This can, for example, be carried out with an apparatus 100 including the processing unit 300.

An algorithm for determining the length of the fluid jet 102 may be implemented as follows. All steps may be carried out by the processing unit 300.

| | | |
|---|---|---|
| Step 1: | Instruct e.g. a laser unit 505 to provide the laser beam 101. | |
| Step 2: | Define the reference points A₀ and A₁, and define a first reference value R₀ and a second reference value R₁ and/or third reference value R₂, e.g. by reading them out from a datasheet or over HMI 600. | |
| Step 3: | Control the motion unit 201 to a first position A₀. | |
| Step 4: | Instruct the detection unit 103 to measure a first detection signal 106, and record it as signal S₀. | |
| Step 5: | Compare the detection signal S₀ to the first reference value R₀. | |
| | If signal S₀<R₀, generate and alarm and/or stop. | |
| | Else, proceed. | |
| Step 6: | Control the motion unit 201 to a further position Aₙ. | |
| Step 7: | Instruct the detection unit 103 to measure a further detection signal 106, and record it as signal Sₙ | |
| Step 8: | Compare the further signal Sn to the first signal S₀ multiplied by the second reference value R₁ and/or compare the further signal Sₙ to the first signal S₀ multiplied by the third reference value R₂, | |
| | If Sₙ<S₀^{∗}R₁ or Sₙ>S₀^{∗}R₂, determine the absolute and/or usable length of the fluid jet 102 based on Aₙ. | |
| | Else, increment Aₙ. | |
| | | If Aₙ≥A₁, stop. |
| | | Else, return to step 6. |

According to the above algorithm, for every position Aₙ, a signal Sₙ is obtained. If the detection unit has an observation unit 200 with an aperture 202 of size d, each signal Sn is obtained with a resolution of ±D/2, wherein D(*d*, *l*) is a function of the size *d* and the distance *l* shown in FIG. 2. Each time Sn is above S₀^{∗}R₁ and/or below S₀^{∗}R₂, the signal is considered positive, and below that limit as negative. Since the reference points A₀ and A₁ have a known distance from the origin of the fluid jet 102, like from the fluid jet generation nozzle 506, the length of the fluid jet 102 can be determined based on the different between Aₙ and A₀.

The signals Sn may be further evaluated, in order to qualify the fluid jet 102, i.e. to determine a laminar behavior of the fluid jet 102, perturbation characteristics of the fluid jet 102. This can be done, for instance, by the length over which secondary radiation 104 is generated in the fluid jet 102. Further, the signals Sₙ may be issued to determine a laser power of the laser light coupled as laser beam 101 into the fluid jet 102. This can be done on the amount (intensity) of the secondary radiation 104 detected.

The present invention has been described in conjunction with various embodiments as examples as well as implementation forms. However, other variations can be understood and effected by those persons skilled in the art and practicing the claimed invention, from the studies of the drawings, the description and the independent claims. In the claims as well as in the description the word "comprising" does not exclude other elements or steps and the indefinite article "a" or "an" does not exclude a plurality. A single element or other unit may fulfill the functions of several entities or items recited in the claims.

## Claims

1. Apparatus (100) for machining a workpiece with a high-intensity laser beam (101), the apparatus (100) being configured to provide a pressurized fluid jet (102) and to couple the laser beam (101) into the fluid jet (102),
**characterized in that** the apparatus (100) comprises
a detection unit (103) configured to receive and detect secondary radiation (104) generated by the laser beam (101) in the fluid jet (102), the detection unit (103) including
a sensing unit (105) configured to convert secondary radiation (104) into a detection signal (106),
wherein the apparatus (100) is configured to generate, with the detection unit (103), a plurality of detection signals (106) at a single position or at different positions along the fluid jet (102),
wherein the apparatus further comprises
a processing unit (300) configured to determine, based on the plurality of detection signals (106) received from the sensing unit (105), at least one flow characteristic of the fluid jet (102).

2. Apparatus (100) according to claim 1, wherein
the detection unit (103) further includes a spectral separation unit (303) configured to isolate at least a part of the received secondary radiation (104) onto the sensing unit (105).

3. Apparatus (100) according to claim 2, wherein
the spectral separation unit (303) includes an optical filter, a prism, a dielectric mirror, a diffraction grating, or a multiple aperture optical setup.

4. Apparatus (100) according to one of the claims 1 to 3, wherein
a position of the detection unit (103) is stationary and the detection unit (103) is configured to observe, from its stationary position, a determined length section (A) along the fluid jet (102), and
the apparatus (100) is configured to generate, with the detection unit (103), the plurality of detection signals (106) at the stationary position of the detection unit (103).

5. Apparatus according to claim 4, wherein
the sensing unit (105) is a charge-coupled device or a spatial array of multiple photodiodes, thermal diodes or avalanche diodes.

6. Apparatus (100) according to one of the claims 1 to 3, further comprising
a motion unit (201) configured to move the detection unit (103) along the fluid jet (102), wherein
the detection unit (103) includes an observation unit (200) arranged to admit secondary radiation (104) propagating towards the sensing unit (105), and
the apparatus (100) is configured to generate, with the detection unit (103), the plurality of detection signals (106) at different positions along the fluid jet (102).

7. Apparatus (100) according to claim 6, wherein
the detection unit (103) is configured to continuously or repeatedly detect secondary radiation (104) and thereby generate the plurality of detection signals (106), while being moved by the motion unit (201) along the fluid jet (102).

8. Apparatus (100) according to claim 6 or 7, wherein
the motion unit (201) is configured to move the detection unit (103) over at least a determined distance (A) between a first reference point (A₀) and a second reference point (A₁) along the fluid jet (102).

9. Apparatus (100) according to claim 8, wherein
the determined distance (A) is between 0-25 cm, preferably is between 0-15 cm.

10. Apparatus (100) according to one of the claims 6 to 9, wherein
the motion unit (201) is configured to move the detection unit (103) stepwise along the fluid jet (102) with a spatial resolution of less than 2 mm, preferably of between 10 µm - 2 mm.

11. Apparatus (100) according to one of the claims 6 to 10, wherein
the observation unit (200) is an opening or tele-centric lens defining an aperture (202).

12. Apparatus (100) according to the claims 10 and 11, wherein
an optical resolution of the detection unit (103) along the fluid jet (102) is defined by the size of the aperture (202) and a distance between the observation unit (200) and the fluid jet (102), and
the size of the aperture (202) and said distance are selected such that the optical resolution of the detection unit (103) is equal to or higher than the spatial resolution of the motion unit (201).

13. Apparatus (100) according to one of the claim 6 to 12, wherein
the sensing unit (105) includes a photodiode, thermal diode or an avalanche diode.

14. Apparatus (100) according to one of the claims 6 to 13, wherein
the detection unit (103) further includes a protection unit (301) for protecting the observation unit (200) from ingress of fluid, humidity, dust and further products of laser beam machining.

15. Apparatus (100) according to claim 14, wherein
the protection unit (301) includes a unit configured to produce an overpressure within at least the observation unit (200) of the detection unit (103).

16. Apparatus (100) according to claim 14 or 15, wherein
the protection unit (301) includes a transparent window covering the observation unit (200) towards the fluid jet (102).

17. Apparatus (100) according to one of the claims 1 to 3, further comprising
a movable machining unit (503) configured to provide the pressurized fluid jet (102) and to couple the laser beam (101) into the fluid jet (102), wherein
the detection unit (103) is stationary and includes the sensing unit (105) and an observation unit (200) arranged to admit secondary radiation (104) propagating towards the sensing unit (105), and
the apparatus (100) is configured to move the machining unit (503), in order to generate, with the detection unit (103), the plurality of detection signals (106) at different positions along the fluid jet (102).

18. Apparatus (100) according to one of the claims 6 to 17, wherein
the detection unit (103) further includes at least one optical element or assembly (302) arranged between the observation unit (200) and the sensing unit (105).

19. Apparatus (100) according to one of the claims 1 to 18, wherein
the secondary radiation (104) is electromagnetic radiation generated by inelastic scattering and/or fluorescence of the laser beam (101) in the fluid jet (102).

20. Apparatus (100) according to one of the claims 1 to 18, wherein
the secondary radiation (104) is laser light scattered in the fluid jet (102).

21. Apparatus (100) according to one of the claims 1 to 20, wherein
the processing unit (300) is further configured to determine a length of the fluid jet (102) based on the plurality of detection signals (106) received from the sensing unit (105).

22. Apparatus (100) according to one of the claims 1 to 21, wherein
the processing unit (300) is further configured to determine, based on the plurality of detection signals (106) received from the sensing unit (105), a power of the laser beam (101) coupled into the fluid jet (102).

23. Method (700) for measuring a pressurized fluid jet (102) guiding a high-intensity laser beam (101) for machining a workpiece, the method (700) comprising:
providing (701) the fluid jet (102) and coupling the laser beam (101) into the fluid jet (102),
**characterized in that** the method further comprises:
receiving and detecting (702), with a detection unit (103), secondary radiation (104) generated by the laser beam (101) in the fluid jet (102), wherein the detecting (702) includes,
converting (702a), with a sensing unit (105), secondary radiation (104) into a detection signal (106),
generating (703), with the detection unit (103), a plurality of detection signals (106) at a single position or at different positions along the fluid jet (102), and
determining, with a processing unit, based on the plurality of detection signals (106) received from the sensing unit (105), at least one flow characteristic of the fluid jet (102).

24. Method (700) according to claim 23, further comprising
moving the detection unit (103) along the fluid jet (102), in order to generate the plurality of detection signals (106) at different positions along the fluid jet (102).

25. Method (700) according to claim 24, further comprising
defining, with the processing unit (300), a first reference value (601),
generating, with the detection unit (103), a first detection signal (106) at a first position along the fluid jet (102),
comparing, with the processing unit (300), the first detection signal (106) with the first reference value (601), and
generating an alarm and/or interrupting the method (700), if the first detection signal (106) is below the first reference value (601).

26. Method (700) according to claim 25, further comprising
defining, with the processing unit (300), a second and/or third reference value,
generating, with the detection unit (103), a further detection signal (106) at a further position along the fluid jet (102),
comparing, with the processing unit (300), the further detection signal (106) with a first product of the first detection signal (106) and the second reference value and/or comparing the further detection signal (106) with a second product of the first detection signal (106) and the third reference value,
determining the length of the fluid jet (102) based on the distance between the first position and the further position, if the further detection signal (106) is smaller than the first product or larger than the second product, and
repeating the obtaining and comparing steps, if the further detection signal (106) is equal to or larger than the first product and/or equal to or smaller than the second product.

## Patentansprüche

1. Vorrichtung (100) zum Bearbeiten eines Werkstücks mit einem hochintensiven Laserstrahl (101), wobei die Vorrichtung (100) dazu eingerichtet ist, einen unter Druck stehenden Flüssigkeitsstrahl (102) bereitzustellen und den Laserstrahl (101) in den Flüssigkeitsstrahl (102) einzukoppeln,
**dadurch gekennzeichnet, dass** die Vorrichtung (100) umfasst:
eine Detektionseinheit (103), die dazu eingerichtet ist, Sekundärstrahlung (104), die durch den Laserstrahl (101) in dem Flüssigkeitsstrahl (102) erzeugt wird, zu empfangen und zu detektieren, wobei die Detektionseinheit (103) enthält:
eine Erfassungseinheit (105), die dazu eingerichtet ist, Sekundärstrahlung (104) in ein Detektionssignal (106) umzuwandeln,
wobei die Vorrichtung (100) dazu eingerichtet ist, mittels der Detektionseinheit (103) eine Vielzahl von Detektionssignalen (106) an einer einzigen Position oder an verschiedenen Positionen entlang des Flüssigkeitsstrahls (102) zu erzeugen,
wobei die Vorrichtung ferner umfasst:
eine Verarbeitungseinheit (300), die dazu eingerichtet ist, basierend auf der aus der Erfassungseinheit (105) empfangenen Vielzahl von Detektionssignalen (106) mindestens eine Strömungscharakteristik des Flüssigkeitsstrahls (102) zu bestimmen.

2. Vorrichtung (100) gemäß Anspruch 1, wobei
die Detektionseinheit (103) ferner eine Spektraltrenneinheit (303) enthält, die dazu eingerichtet ist, mindestens einen Teil der empfangenen Sekundärstrahlung (104) auf die Erfassungseinheit (105) zu isolieren.

3. Vorrichtung (100) gemäß Anspruch 2, wobei
die Spektraltrenneinheit (303) ein optisches Filter, ein Prisma, einen dielektrischen Spiegel, ein Beugungsgitter oder eine optische Anordnung mit mehreren Blenden enthält.

4. Vorrichtung (100) gemäß einem der Ansprüche 1 bis 3, wobei
eine Position der Detektionseinheit (103) ortsfest ist und die Detektionseinheit (103) dazu eingerichtet ist, aus ihrer ortsfesten Position einen bestimmten Längenabschnitt (A) entlang des Flüssigkeitsstrahls (102) zu beobachten, und
die Vorrichtung (100) dazu eingerichtet ist, mittels der Detektionseinheit (103) die Vielzahl von Detektionssignalen (106) an der ortsfesten Position der Detektionseinheit (103) zu erzeugen.

5. Vorrichtung gemäß Anspruch 4, wobei
die Sensoreinheit (105) ein ladungsgekoppeltes Bauelement oder ein räumliches Feld aus mehreren Fotodioden, thermischen Dioden oder Lawinendioden ist.

6. Vorrichtung (100) gemäß einem der Ansprüche 1 bis 3, ferner umfassend:
eine Bewegungseinheit (201), die dazu eingerichtet ist, die Detektionseinheit (103) entlang des Flüssigkeitsstrahls (102) zu bewegen, wobei
die Detektionseinheit (103) eine Beobachtungseinheit (200) enthält, die dazu eingerichtet ist, Sekundärstrahlung (104) aufzunehmen, die sich in Richtung der Erfassungseinheit (105) ausbreitet, und
die Vorrichtung (100) dazu eingerichtet ist, mittels der Detektionseinheit (103) die Vielzahl von Detektionssignalen (106) an verschiedenen Positionen entlang des Flüssigkeitsstrahls (102) zu erzeugen.

7. Vorrichtung (100) gemäß Anspruch 6, wobei
die Detektionseinheit (103) dazu eingerichtet ist, kontinuierlich oder wiederholt Sekundärstrahlung (104) zu detektieren und dadurch die Vielzahl von Detektionssignalen (106) zu erzeugen, während sie durch die Bewegungseinheit (201) entlang des Flüssigkeitsstrahls (102) bewegt wird.

8. Vorrichtung (100) gemäß Anspruch 6 oder 7, wobei
die Bewegungseinheit (201) dazu eingerichtet ist, die Detektionseinheit (103) über mindestens eine bestimmte Strecke (A) zwischen einem ersten Referenzpunkt (A₀) und einem zweiten Referenzpunkt (A₁) entlang des Flüssigkeitsstrahls (102) zu bewegen.

9. Vorrichtung (100) gemäß Anspruch 8, wobei
der bestimmte Abstand (A) zwischen 0-25 cm, vorzugsweise zwischen 0-15 cm, liegt.

10. Vorrichtung (100) gemäß einem der Ansprüche 6 bis 9, wobei
die Bewegungseinheit (201) dazu eingerichtet ist, die Detektionseinheit (103) schrittweise entlang des Flüssigkeitsstrahls (102) mit einer räumlichen Auflösung von kleiner als 2 mm, vorzugsweise zwischen 10 µm und 2 mm, zu bewegen.

11. Vorrichtung (100) gemäß einem der Ansprüche 6 bis 10, wobei
die Beobachtungseinheit (200) eine Öffnung oder telezentrische Linse ist, die eine Blende (202) definiert.

12. Vorrichtung (100) gemäß den Ansprüchen 10 und 11, wobei
eine optische Auflösung der Detektionseinheit (103) entlang des Flüssigkeitsstrahls (102) durch die Größe der Blende (202) und einen Abstand zwischen der Beobachtungseinheit (200) und dem Flüssigkeitsstrahl (102) definiert ist, und
die Größe der Blende (202) und der Abstand so gewählt sind, dass die optische Auflösung der Detektionseinheit (103) gleich oder größer als die räumliche Auflösung der Bewegungseinheit (201) ist.

13. Vorrichtung (100) gemäß einem der Ansprüche 6 bis 12, wobei
die Erfassungseinheit (105) eine Fotodiode, eine thermische Diode oder eine Lawinendiode enthält.

14. Vorrichtung (100) gemäß einem der Ansprüche 6 bis 13, wobei
die Detektionseinheit (103) ferner eine Schutzeinheit (301) zum Schützen der Beobachtungseinheit (200) vor dem Eindringen von Flüssigkeit, Feuchtigkeit, Staub und weiteren Produkten der Laserstrahlbearbeitung enthält.

15. Vorrichtung (100) gemäß Anspruch 14, wobei
die Schutzeinheit (301) eine Einheit enthält, die dazu eingerichtet ist, einen Überdruck in mindestens der Beobachtungseinheit (200) der Detektionseinheit (103) zu erzeugen.

16. Vorrichtung (100) gemäß Anspruch 14 oder 15, wobei
die Schutzeinheit (301) ein durchsichtiges Fenster aufweist, das die Beobachtungseinheit (200) in Richtung des Flüssigkeitsstrahls (102) abdeckt.

17. Vorrichtung (100) gemäß einem der Ansprüche 1 bis 3, ferner umfassend:
eine bewegbare Bearbeitungseinheit (503), die dazu eingerichtet ist, den unter Druck stehenden Flüssigkeitsstrahl (102) bereitzustellen und den Laserstrahl (101) in den Flüssigkeitsstrahl (102) einzukoppeln, wobei
die Detektionseinheit (103) ortsfest ist und die Erfassungseinheit (105) und eine Beobachtungseinheit (200) enthält, die dazu eingerichtet ist, Sekundärstrahlung (104) aufzunehmen, die sich in Richtung der Erfassungseinheit (105) ausbreitet, und
die Vorrichtung (100) dazu eingerichtet ist, die Bearbeitungseinheit (503) zu bewegen, um mittels der Detektionseinheit (103) die Vielzahl von Detektionssignalen (106) an verschiedenen Positionen entlang des Flüssigkeitsstrahls (102) zu erzeugen.

18. Vorrichtung (100) gemäß einem der Ansprüche 6 bis 17, wobei
die Detektionseinheit (103) ferner mindestens ein optisches Element oder eine optische Anordnung (302) enthält, die zwischen der Beobachtungseinheit (200) und der Erfassungseinheit (105) angeordnet ist.

19. Vorrichtung (100) gemäß einem der Ansprüche 1 bis 18, wobei
die Sekundärstrahlung (104) eine elektromagnetische Strahlung ist, die durch inelastische Streuung und/oder Fluoreszenz des Laserstrahls (101) im Flüssigkeitsstrahl (102) erzeugt wird.

20. Vorrichtung (100) gemäß einem der Ansprüche 1 bis 18, wobei
die Sekundärstrahlung (104) Laserlicht ist, das im Flüssigkeitsstrahl (102) gestreut wird.

21. Vorrichtung (100) gemäß einem der Ansprüche 1 bis 20, wobei
die Verarbeitungseinheit (300) ferner dazu eingerichtet ist, eine Länge des Flüssigkeitsstrahls (102) basierend auf der aus der Erfassungseinheit (105) empfangenen Vielzahl von Detektionssignalen (106) zu bestimmen.

22. Vorrichtung (100) gemäß einem der Ansprüche 1 bis 21, wobei
die Verarbeitungseinheit (300) ferner dazu eingerichtet ist, basierend auf der aus der Erfassungseinheit (105) empfangenen Vielzahl von Detektionssignalen (106) eine Leistung des in den Flüssigkeitsstrahl (102) eingekoppelten Laserstrahls (101) zu bestimmen.

23. Verfahren (700) zum Messen eines unter Druck stehenden Flüssigkeitsstrahls (102), der einen hochintensiven Laserstrahl (101) zum Bearbeiten eines Werkstücks führt, wobei das Verfahren (700) umfasst:
Bereitstellen (701) des Flüssigkeitsstrahls (102) und Einkoppeln des Laserstrahls (101) in den Flüssigkeitsstrahl (102),
**dadurch gekennzeichnet, dass** das Verfahren ferner umfasst:
Empfangen und Detektieren (702) von Sekundärstrahlung (104), die durch den Laserstrahl (101) im Flüssigkeitsstrahl (102) erzeugt wird, mittels einer Detektionseinheit (103), wobei das Detektieren (702) beinhaltet:
Umwandeln (702a) der Sekundärstrahlung (104) in ein Detektionssignal (106) mittels einer Erfassungseinheit (105),
Erzeugen (703) einer Vielzahl von Detektionssignalen (106) mittels der Detektionseinheit (103) an einer einzigen Position oder an verschiedenen Positionen entlang des Flüssigkeitsstrahls (102), und
Bestimmen mindestens einer Strömungscharakteristik des Flüssigkeitsstrahls (102) mittels einer Verarbeitungseinheit basierend auf der Vielzahl von aus der Erfassungseinheit (105) empfangenen Detektionssignalen (106).

24. Verfahren (700) gemäß Anspruch 23, ferner umfassend:
Bewegen der Detektionseinheit (103) entlang des Flüssigkeitsstrahls (102), um die Vielzahl von Detektionssignalen (106) an verschiedenen Positionen entlang des Flüssigkeitsstrahls (102) zu erzeugen.

25. Verfahren (700) gemäß Anspruch 24, ferner umfassend:
Definieren eines ersten Referenzwertes (601) mittels der Verarbeitungseinheit (300),
Erzeugen eines ersten Detektionssignals (106) mittels der Detektionseinheit (103) an einer ersten Position entlang des Flüssigkeitsstrahls (102),
Vergleichen des ersten Detektionssignals (106) mit dem ersten Referenzwert (601) mittels der Verarbeitungseinheit (300), und
Erzeugen eines Alarms und/oder Unterbrechen des Verfahrens (700), wenn das erste Detektionssignal (106) unter dem ersten Referenzwert (601) liegt.

26. Verfahren (700) gemäß Anspruch 25, ferner umfassend:
Definieren eines zweiten und/oder dritten Referenzwertes mittels der Verarbeitungseinheit (300),
Erzeugen eines weiteren Detektionssignals (106) mittels der Detektionseinheit (103) an einer weiteren Position entlang des Flüssigkeitsstrahls (102),
Vergleichen des weiteren Detektionssignals (106) mit einem ersten Produkt des ersten Detektionssignals (106) und dem zweiten Referenzwert und/oder Vergleichen des weiteren Detektionssignals (106) mit einem zweiten Produkt des ersten Detektionssignals (106) und dem dritten Referenzwert mittels der Verarbeitungseinheit (300),
Bestimmen der Länge des Flüssigkeitsstrahls (102) basierend auf dem Abstand zwischen der ersten Position und der weiteren Position, wenn das weitere Detektionssignal (106) kleiner als das erste Produkt oder größer als das zweite Produkt ist, und
Wiederholen der Ermittlungs- und Vergleichsschritte, wenn das weitere Detektionssignal (106) gleich oder größer als das erste Produkt und/oder gleich oder kleiner als das zweite Produkt ist.

## Revendications

1. Appareil (100) destiné à usiner une pièce de fabrication avec un faisceau laser à haute intensité (101), l'appareil (100) étant configuré pour fournir un jet de fluide sous pression (102) et pour coupler le faisceau laser (101) à l'intérieur du jet de fluide (102),
**caractérisé en ce que** l'appareil (100) comprend
une unité de détection (103) configurée pour recevoir et détecter un rayonnement secondaire (104) généré par le faisceau laser (101) dans le jet de fluide (102), l'unité de détection (103) comportant
une unité sensible (105) configurée pour convertir le rayonnement secondaire (104) en un signal de détection (106),
l'appareil (100) étant configuré pour générer, avec l'unité de détection (103), une pluralité de signaux de détection (106) à une seule position ou à différentes positions le long du jet de fluide (102),
l'appareil comprenant en outre
une unité de traitement (300) configurée pour déterminer, sur la base de la pluralité de signaux de détection (106) reçus depuis l'unité sensible (105), au moins une caractéristique d'écoulement du jet de fluide (102) .

2. Appareil (100) selon la revendication 1, dans lequel
l'unité de détection (103) comporte en outre une unité de séparation spectrale (303) configurée pour isoler au moins une partie du rayonnement secondaire reçu (104) sur l'unité sensible (105).

3. Appareil (100) selon la revendication 2, dans lequel
l'unité de séparation spectrale (303) comporte un filtre optique, un prisme, un miroir diélectrique, un réseau de diffraction, ou un montage optique à ouvertures multiples.

4. Appareil (100) selon une des revendications 1 à 3, dans lequel
un position de l'unité de détection (103) est stationnaire et l'unité de détection (103) est configurée pour observer, depuis sa position stationnaire, une section de longueur déterminée (A) le long du jet de fluide (102), et
l'appareil (100) est configuré pour générer, avec l'unité de détection (103), la pluralité de signaux de détection (106) à la position stationnaire de l'unité de détection (103).

5. Appareil selon la revendication 4, dans lequel
l'unité sensible (105) est un dispositif à couplage de charge ou un réseau spatial de multiples photodiodes, diodes thermiques ou diodes à avalanche.

6. Appareil (100) selon une des revendications 1 à 3, comprenant en outre
une unité de déplacement (201) configurée pour déplacer l'unité de détection (103) le long du jet de fluide (102), dans lequel
l'unité de détection (103) comporte une unité d'observation (200) agencée pour laisser entrer le rayonnement secondaire (104) se propageant vers l'unité sensible (105), et
l'appareil (100) est configuré pour générer, avec l'unité de détection (103), la pluralité de signaux de détection (106) à différentes positions le long du jet de fluide (102).

7. Appareil (100) selon la revendication 6, dans lequel
l'unité de détection (103) est configurée pour détecter de façon continue ou répétée le rayonnement secondaire (104) et générer ainsi la pluralité de signaux de détection (106), tout en étant déplacée par l'unité de déplacement (201) le long du jet de fluide (102).

8. Appareil (100) selon la revendication 6 ou 7, dans lequel
l'unité de déplacement (201) est configurée pour déplacer l'unité de détection (103) au moins sur une distance déterminée (A) entre un premier point de référence (A₀) et un deuxième point de référence (A₁) le long du jet de fluide (102).

9. Appareil (100) selon la revendication 8, dans lequel
la distance déterminée (A) fait 0-25 cm, de préférence fait 0-15 cm.

10. Appareil (100) selon une des revendications 6 à 9, dans lequel
l'unité de déplacement (201) est configurée pour déplacer l'unité de détection (103) pas à pas le long du jet de fluide (102) avec une résolution spatiale de moins de 2 mm, de préférence comprise entre 10 µm et 2 mm.

11. Appareil (100) selon une des revendications 6 à 10, dans lequel
l'unité d'observation (200) est une ouverture ou une lentille télécentrique définissant un orifice (202).

12. Appareil (100) selon les revendications 10 et 11, dans lequel
une résolution optique de l'unité de détection (103) le long du jet de fluide (102) est définie par la taille de l'orifice (202) et une distance entre l'unité d'observation (200) et le jet de fluide (102), et
la taille de l'orifice (202) et ladite distance sont sélectionnées de telle sorte que la résolution optique de l'unité de détection (103) est égale ou supérieure à la résolution spatiale de l'unité de déplacement (201).

13. Appareil (100) selon une des revendications 6 à 12, dans lequel
l'unité sensible (105) comporte une photodiode, une diode thermique ou une diode à avalanche.

14. Appareil (100) selon une des revendications 6 à 13, dans lequel
l'unité de détection (103) comporte en outre une unité de protection (301) pour protéger l'unité d'observation (200) de l'entrée de fluide, d'humidité, de poussière et d'autres produits d'usinage par faisceau laser.

15. Appareil (100) selon la revendication 14, dans lequel
l'unité de protection (301) comporte une unité configurée pour produire une surpression au moins à l'intérieur de l'unité d'observation (200) de l'unité de détection (103).

16. Appareil (100) selon la revendication 14 ou 15, dans lequel
l'unité de protection (301) comporte une fenêtre transparente recouvrant l'unité d'observation (200) vers le jet de fluide (102).

17. Appareil (100) selon une des revendications 1 à 3, comprenant en outre
une unité d'usinage mobile (503) configurée pour fournir le jet de fluide sous pression (102) et pour coupler le faisceau laser (101) à l'intérieur du jet de fluide (102), dans lequel
l'unité de détection (103) est stationnaire et comporte l'unité sensible (105) et une unité d'observation (200) agencée pour laisser entrer le rayonnement secondaire (104) se propageant vers l'unité sensible (105), et
l'appareil (100) est configuré pour déplacer l'unité d'usinage (503) afin de générer, avec l'unité de détection (103), la pluralité de signaux de détection (106) à différentes positions le long du jet de fluide (102) .

18. Appareil (100) selon une des revendications 6 à 17, dans lequel
l'unité de détection (103) comporte en outre au moins un élément ou ensemble optique (302) disposé entre l'unité d'observation (200) et l'unité sensible (105).

19. Appareil (100) selon une des revendications 1 à 18, dans lequel
le rayonnement secondaire (104) est un rayonnement électromagnétique généré par diffusion inélastique et/ou fluorescence du faisceau laser (101) dans le jet de fluide (102).

20. Appareil (100) selon une des revendications 1 à 18, dans lequel
le rayonnement secondaire (104) est de la lumière laser diffusée dans le jet de fluide (102).

21. Appareil (100) selon une des revendications 1 à 20, dans lequel
l'unité de traitement (300) est en outre configurée pour déterminer une longueur du jet de fluide (102) sur la base de la pluralité de signaux de détection (106) reçus depuis l'unité sensible (105).

22. Appareil (100) selon une des revendications 1 à 21, dans lequel
l'unité de traitement (300) est en outre configurée pour déterminer, sur la base de la pluralité de signaux de détection (106) reçus depuis l'unité sensible (105), une puissance du faisceau laser (101) couplé à l'intérieur du jet de fluide (102).

23. Procédé (700) servant à mesurer un jet de fluide sous pression (102) guidant un faisceau laser à haute intensité (101) destiné à usiner une pièce de fabrication, le procédé (700) comprenant :
l'obtention (701) du jet de fluide (102) et le couplage du faisceau laser (101) à l'intérieur du jet de fluide (102),
**caractérisé en ce que** le procédé comprend en outre :
la réception et la détection (702), avec une unité de détection (103), d'un rayonnement secondaire (104) généré par le faisceau laser (101) dans le jet de fluide (102), la détection (702) comportant
la conversion (702a), avec une unité sensible (105), du rayonnement secondaire (104) en un signal de détection (106),
la génération (703), avec l'unité de détection (103), d'une pluralité de signaux de détection (106) à une seule position ou à différentes positions le long du jet de fluide (102), et
la détermination, avec une unité de traitement, sur la base de la pluralité de signaux de détection (106) reçus depuis l'unité sensible (105), d'au moins une caractéristique d'écoulement du jet de fluide (102).

24. Procédé (700) selon la revendication 23, comprenant en outre
le déplacement de l'unité de détection (103) le long du jet de fluide (102) afin de générer la pluralité de signaux de détection (106) à différentes positions le long du jet de fluide (102).

25. Procédé (700) selon la revendication 24, comprenant en outre
la définition, avec l'unité de traitement (300), d'une première valeur de référence (601),
la génération, avec l'unité de détection (103), d'un premier signal de détection (106) à une première position le long du jet de fluide (102),
la comparaison, avec l'unité de traitement (300), du premier signal de détection (106) à la première valeur de référence (601), et
la génération d'une alarme et/ou l'interruption du procédé (700) si le premier signal de détection (106) est sous la première valeur de référence (601).

26. Procédé (700) selon la revendication 25, comprenant en outre
la définition, avec l'unité de traitement (300), d'une deuxième et/ou troisième valeur de référence,
la génération, avec l'unité de détection (103), d'un autre signal de détection (106) à une autre position le long du jet de fluide (102),
la comparaison, avec l'unité de traitement (300), de l'autre signal de détection (106) à un premier produit du premier signal de détection (106) et de la deuxième valeur de référence et/ou la comparaison de l'autre signal de détection (106) à un deuxième produit du premier signal de détection (106) et de la troisième valeur de référence,
la détermination de la longueur du jet de fluide (102) sur la base de la distance entre la première position et l'autre position, si l'autre signal de détection (106) est inférieur au premier produit ou supérieur au deuxième produit, et
la répétition des étapes d'obtention et de comparaison si l'autre signal de détection (106) est égal ou supérieur au premier produit et/ou égal ou inférieur au deuxième produit.
